# EUROPEAN PATENT APPLICATION

(11) **EP 1 821 328 A1**
(43) Date of publication of application: **22.08.2007**
(21) Application number: 06002762.0
(22) Date of filing: 10.02.2006
(51) Int. Cl.: H01J 7/18

(54) **Metallic dendritic gas sorbents and method for producing the same**

(71) Applicant: Nanoshell Materials Research & Development GmbH, 9020 Klagenfurt (AT)
(72) Inventor: Chuntonov, Konstantin, Dr., 9020 Klagenfurt (AT); Ipser, Herbert, Prof. Dr., 1230 Wien (AT); Richter, Klaus, Dr., 1180 Wien (AT)
(74) Representative: Becker Kurig Straus

(57) **Abstract**

The present invention describes a new class of gas sorbents on the basis of metals selected from the group of transition, rare-earth, or alkaline-earth metals in the form of granular or planar materials. Due to their cellular-dendritic structure the materials have high sorption parameters and a prolonged life-time.

## Description

### Field of the invention

The present invention relates to the field of metallic gas sorbents used in vacuum technology and for gas purification.

### Description of related art

At present the material basis for the most widely used metallic gas sorbents (also called getters) is formed by four transition metals: Hf, Ti, V and Zr. The preference given for these metals is due to their ability to form solid solutions in a wide range of concentrations with the residual gases of vacuum chambers or with certain components of these gases.

The ability of Hf, Ti, V and Zr to dissolve in themselves or react with active gases, such as O₂, N₂, H₂, H₂O, CO, CO₂, is realized only in a heated state, while at room temperature only gas adsorption, limited by the size of the surface accessible to gases, is possible. That is why all the research and development efforts of the last twenty years aimed at creating getter materials with maximally developed surfaces and minimum activation temperatures.

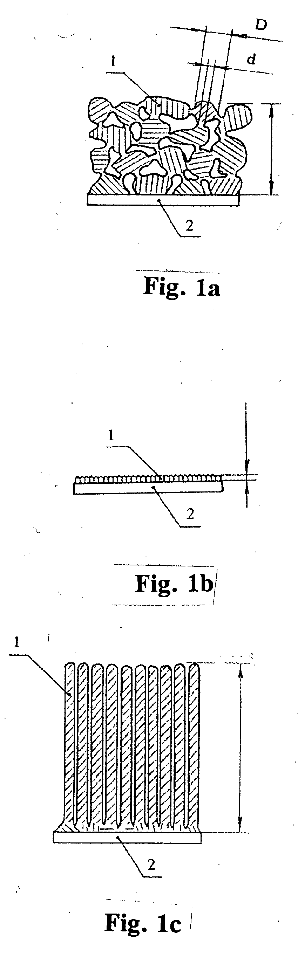

For a number of reasons there is a limit to increasing the specific surface of getter materials produced using sintering operations, and this limit has been reached e. g. in the standard product of the SAES Getters company (1). Similarly, for getter coatings deposited by sputtering directly onto the walls of a vacuum chamber, the lower temperature limit which is set for the activation process by the very nature of the transition metals, has already been approached quite closely (2).
(1) Typical getters of the first type [see Solutions for Flat Panel Displays. FED HPTF Getter. SAES Getters Group brochure.2004] are shown schematically in Fig. 1a: a thin metallic strip is coated with powder particles of a gas sorbent, interconnected and connected to the substrate by diffusion bridges, which are formed at the stage of sintering of the material. Notwithstanding the advantages of this kind of product, the material has a serious topological drawback, namely, the voids between the particles are randomly connected pores and channels, where the diameter of the diffusion bridges d is on average much smaller than the average diameter of the particles D. These two structural peculiarities considerably decrease the operational potential of the material.
   In fact, penetration of gas molecules into the getter layer along the labyrinth of voids is difficult for obvious geometrical reasons, leading to a significant decrease of the sorption kinetics. For their part, diffusion bridges are the weakness of the material, since volume oversaturation of a getter with gases leads to an early embrittlement long before the total sorption resource is exhausted. Consequently the getter sorption potential of this type of material is not exploited in an optimal way: the disordered arrangement of voids lowers the getter pumping rate and leads to an early peeling off and to the formation of loose particles due to destruction of diffusion bridges thus shortening the life time of the product.
(2) Getters of the second type are in their essence metallic films (see Fig. 1b) deposited on relatively massive and cold substrates. Formation of condensate takes place here under the conditions of strong overcooling of the mother phase, which leads to amorphous or quasi-crystalline structures of the getter material [C. Benvenuti, et al: Vacuum, 60 (2001) 57 - 65]. Amorphization of the film means increase in the concentration of structural defects to the highest level possible in the solid state. This extreme defect structure provides the maximal rate of volume diffusion of impurity gases in the given material, which was the physical basis for the record decrease of the activation temperature to 180°C [C. Benvenuti, et al: Vacuum, 60 (2001) 57 - 65].

However, film getters have an unfavorable relation between the price of the product and its technical advantages. The sorption capacity of these getters is very low, approximately by two orders of magnitude, than of getters of the first type. That is why the appropriateness of the deposition of a getter coating not on a displaceable substrate, but rather directly on a vacuum chamber wall is questionable. Moreover, there is not only the problem that the product of a high cost technology appears to be a material which looses its pumping properties very fast, but also additional risks which are connected with the instability of the metastable structure of the material and the high probability of its transition into an equilibrium crystalline state.

Simple estimations show that getter films of transition metals having a thickness of 1 µm and a porosity of 0.5 are able to sorb residual gases continuously for up to three years at a vacuum pressure of 10⁻¹⁰ mbar and with a proper activation, after which they themselves become a source of contamination of the vacuum chamber with carbide and oxide particles etc. Crystallization of the film can speed up these negative processes noticeable as a peeling off of the film or its cracking with subsequent falling off from the substrate. Recent attempts to develop multilayer getter coatings [A. Conte, et al: US-A-6,783,696; A. Conte, et al: US Patent Application No. 2004 0253476] illustrate the desire to keep the detached particles inside the getter layers.

Lithium films which do not need thermal activation and which can be easily removed after usage without damaging vacuum equipment (e.g. by blowing a chamber with overheated vapor), can become an alternative for the getters of the second type (see EP 05 025 992.8).

At the same time getters of the first type are open to significant improvement by means of suitable restructuring of already existing materials. For this purpose, as shown below, we succeeded in adopting the sublimation method, created originally for the production of Ca- and Sr-containing dendritic intermetallic granules, to devices with a range of transition, rare-earth and alkaline-earth metals. This development of the method allows a considerable widening of the material basis for new getter structures.

### Brief summary of the invention

Thus it is an object of the present invention to provide a new class of gas sorbents with high surface area and a method for producing the same, the peculiarity of which consists in the dimensional homogeneity of its structural elements and their regular arrangement.

The material according to the present invention can be produced in any shape, but granular or planar shapes are preferable. The first one is described EP 1 600 232 A1, the second one is considered below.

The geometrical principle used in the new gas sorbent according to the present invention is shown in Fig. 1c: the sorbing mass and voids form two more or less ordered subsystems, one of which is represented by an assemblage of metallic rods of getter material oriented normally to the substrate and retained on it by adhesion or cohesion forces. In an alternative description, it is represented by an assemblage of parallel channels separating these rods.

Such a structure is the best specific solution for the sorption process. It is maximally permeable for gases and at the same time it is a trap for them. Compared to the getters of the known types, it also allows for a given sorbing mass the largest specific surface, which together with the other features gives the new product an incontestable advantage in sorption rate. Finally, the life time of getters with the new structure is increased by many times: the state of complete volume saturation is reached by all the structural units of the material practically at the same time.

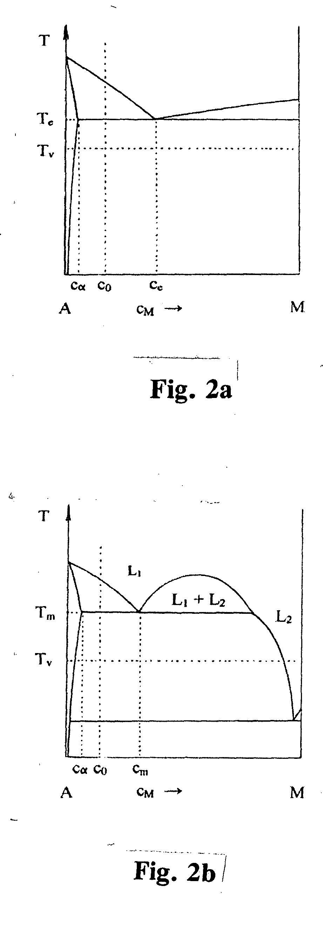

As a specific advantage of the new material, it can be obtained as a result of a two-stage process, both stages of which (taken separately) have been well studied and widely used in science and industry: cellular dendrite crystallization and vacuum evaporation. The initial material for the mentioned two-stage treatment are alloys of the concentration range 0 < c₀ < cₑ (Fig. 2a) or 0 < c₀ < cₘ (Fig. 2b), belonging to eutectic or monotectic systems A - M, respectively, where A is the future metallic gas sorbent and M is an auxiliary chemically active component, the vapor pressure of which is higher than that of A by three or more orders of magnitude.

The technical process can shortly be described as follows. First, a coating of the composition c₀ is deposited on a metallic substrate. This coating is obtained by direct crystallization with feeding the growing crystals from a vapor-gas mixture or from a melt. The growth texture of the solidifying material is maintained by applying a temperature gradient created by frontal heat removal from the substrate.

The structure, which appears as the result, consists of a system of dendritic rods of the initial phase A, perpendicular to the substrate, and the products of solidification of liquid cₑ or cₘ, which are pushed aside during growth of rods A to the space between them. That is, interdendritic space contains an ordered mixture of crystal phases A and M.

Then, at the second stage of the process, making use of high volatility of M, the space between rods A is cleared from crystals M, creating in this way channels for unimpeded penetration of gases into the entire depth of the getter layer. For this purpose the substrate with the coating is heated in vacuum to a certain temperature Tᵥ (Fig. 2) and exposed under this temperature till the phase M has been completely removed by evaporation. At this stage, the A - constituent of the eutectic, which occupied the space between the dendrites, under the influence of heating partially consolidates improving further the permeability of the channels.

The presented method of obtaining gas-permeable regular structures is based on the general regularities of behavior of metallic substances at crystallization and vaporization. Therefore it is applicable to all metallic systems A - M, the components of which submit to the condition p_{M} /p_{A} ≥ 10³ (p - vapor pressure of the corresponding components), and phase diagrams of which have a form of Fig. 2a or Fig. 2b. Three groups of new gas sorbents to which the method of evaporation of a volatile phase M from an alloy c₀ (obtained by dendritic crystallization) can be applied are presented in the following:
1. Gas sorbents based on transition metals. The initial material is an alloy c₀ of a system A - M, where A = Hf, Ti, V or Zr, or any alloy of these metals, or one of these metals with a small addition of a third metal, and M = Dy, Er, Gd, Ho, Nd, Cu, or any alloy of the mentioned lanthanides.
2. Gas sorbents based on rare-earth metals. The initial material is an alloy c₀ of a system A - M, where A = Ce, La, Nd, Pm, Pr, Sm and other members of the Lanthanide series, except Eu and Yb, or any alloy of the mentioned metals, or one of them with a small addition of the third metal, and M = Li, Eu or Yb.
3. Gas sorbents based on alkaline-earth metals. The initial material is an alloy c₀ of a system A - M, where A = Mg, Ca, Sr, or Ba, or any alloy of these metals, or one of them with a small addition of the third metal, and M = Na.

Gas sorbents of the above mentioned composition are supposed to be used at room temperature. They can be can be produced not only in the form of a getter coating on a substrate, but also in the form of dendrite-containing granules, obtained by quenching the droplets of the melt c₀ in an inert liquid cooling agent with subsequent vacuum evaporation of the volatile phase M (see EP 1 600 232 A1).

The quoted methods of quenching/sublimation are based on the same physicochemical basis: on the eutectic nature of the treated alloys, and on a big difference of the volatility of the phase constituents of these alloys. Both methods are equally applicable to all substances which possess the sum of the mentioned characteristics and contain a dendrite constituent.

Notwithstanding all the similarities of the two products, there are quite a number of differences, which suggest considering granular and/or a planar forms of dendritic gas sorbents as technically independent solutions. These differences are given in a table below.

| | | |
|---|---|---|
| Product characteristics or techniques | Present invention | EP 1 600 232 A1 |
| General form of a gas sorbent | Planar getter coatings | Granules |
| Material structure | Cellular dendritic crystals | Developed dendritic carcass with secondary arms |
| Method of crystallization of an alloy c₀ | Directed growth on a substrate | Quenching of granules in a coolant |
| Application field | All kinds of gas sorptions with preferable usage in vacuum technology | All kinds of gas sorptions with preferable usage in gas purification |

Finally, it should be stated that both for planar and for granular gas sorbents it is possible to perform incomplete evaporation of phase M for enhancing the sorption effect. In this case the remains of the more active phase additionally contribute to the reactions of the getter materials with gases.

### Brief Description of the Drawings

Fig. 1 shows schematic views of getter coatings.

Reference numeral 1 is a body of a gas sorbent, reference numeral 2 is a substrate.
- Fig. 1a: shows a structure of a getter of HPTF type. The diameter of connections d is smaller than the average size of particles D. The thickness of the coating is ~ 0.1 mm.
- Fig. 1b: shows a structure of an NEG - coating. The thickness of the coating is ~ 1 µm, therefore the sorption capacity is very small, and the danger of contaminating the chamber with particles of oxides, nitrides etc. is very high.
- Fig. 1c: shows a structure of a micro-rod (cellular) type getter. The thickness of the coating is ~ 1 mm, therefore the sorption capacity is very high. The substrate plays the role of a support.
- Fig. 2: shows phase diagrams of alloys A - M
(a) a system of an eutectic type
(b) a system of a monotectic type

Tₑ, Tₘ, and Tᵥ are the eutectic, monotectic and evaporation temperatures, respectively. Tᵥ depends on the vapor pressure of M and is not connected to either Tₘ or Tₑ, i.e. it can be, e.g., Tᵥ > Tₑ or Tᵥ < Tₑ.

c_{α}, c₀, cₑ, and cₘ are the concentrations of the component M in solid A at saturation, the initial, the eutectic, and the monotectic concentrations, respectively.

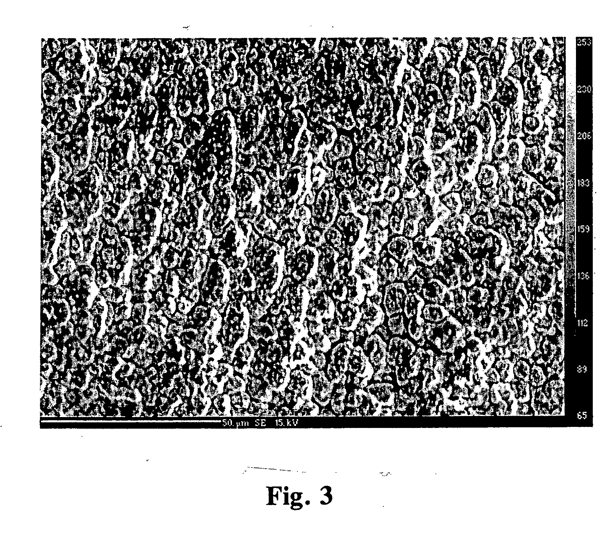

Fig. 3 Cellular structure.

The material was prepared from an initial alloy of Zr with 15 at % Dy upon quenching of a melt droplet on a copper tray in argon atmosphere and sublimation of Dy at 950°C.

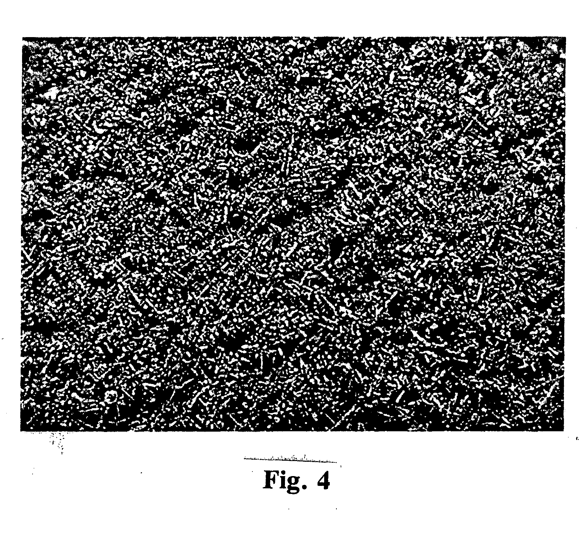

Fig. 4 Dendritic carcass.

Dendrites of Sr, obtained by evaporation of Na from an alloy of Sr with 45 at % Na at 250°C. Dimensional uniformity of the crystal is clearly seen.

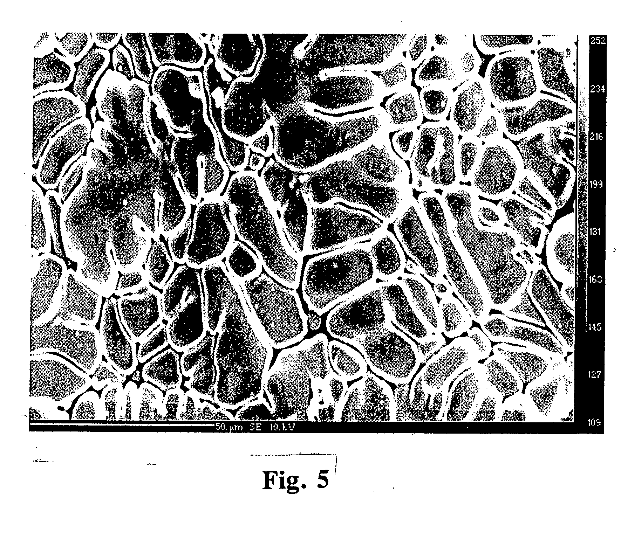

Fig. 5 Dendritic structure.

Dendrites of V, obtained upon quenching in argon an alloy of V with 12 at % of Cu and sublimation of Cu at 1000°C. Voids between dendritic arms are clearly seen.

### Detailed Description of the Invention

The present invention provides the use of metallic gas sorbents with a wide choice of new materials with different sorption properties, which cover all kinds of getter applications. According to the improved structure the new materials allow achieving higher sorption parameters of a gas sorbent. The temperature of application is room temperature.

The new materials according to the present invention include all groups of metals possessing sorption capabilities (1). The new production technology enables controlling the structure of the product (2).
(1) Alloys A - M listed in chapter III practically cover all kinds of sorption potentials of metallic elements. Thus, the transition metals Hf, Ti, V and Zr due to their tendency to passivation fulfill the requirements of those vacuum applications, were the getter material has to contact the atmosphere from time to time. Alkali and alkaline - earth metals excel all the other metals in sorption rate and in practically achievable sorption capacity, which makes them the best getter material for gas purifiers, sealed-off devices, and also for applications where chemical fixation of methane is required. Finally, rare-earth metals with their high selectivity in gas sorption are irreplaceable in some special cases, e.g., in sorption of hydrogen.
   Variations in the composition not only allow influencing the chemical behavior of a gas sorbent, but also its structure and other properties. For example, the above-mentioned small amounts of the third metal, which belongs neither to A - metals nor to M - metals, are added for improving the mechanical strength of the material of the gas sorbent, which may be necessary because of its fine structure. At the same time, incomplete evaporation of the active metal M is a tool for improving the sorption parameters of the material. This happens both as a result of a direct participation of a more active metal in the sorption process and due to the appearance of positive side effects like increase of diffusion permeability of grain boundaries, or improvement of the vacuum in an evaporation chamber through deposition of chemically active gas components (condensates), etc.
   The new gas sorbents can be manufactured in granular or planar form with an explicit cellular-dendritic structure. This structure in a form of a specially isolated dendritic carcass of phase A in granular gas sorbents or in a form of a system of parallel micro-rods of phase A in planar gas sorbents is characterized by dimensional homogeneity of the structural units of the material, and also by a maximum of gas permeability.
   The dimensional homogeneity of cellular rods (Fig. 3) or dendritic arms (Fig. 4) together with the high gas permeability of the structure provide uniform saturation of the getter material with gases in all of its structural elements. Already the fact that the entire volume of the new material approaches the limit of solubility of gases practically at the same time, prolongs the life time of the gas sorbent by many times, compared with the standard product of SAES Getters, which is obtained using baking operations.
   The high gas-permeability of a planar gas sorbent follows from the linearity and the ordered arrangement of the channels leading through the getter coating from its surface to the substrate.
   In granule gas sorbents the voids are distributed more randomly, but they are characterized by a high degree of coherence due to the specific solidification process and also by a high inclusion volume fraction of voids which is higher than that of planar gas sorbents. There thus appears to be a certain compensation of effects leveling the permeability of the voids in both materials.
   Due to the high permeability of the voids, the thickness of the getter coating of planar gas sorbents can be increased by many times compared with the getter layer of the standard HPTF - getters, like SAES Getters [Solutions for Flat Panel Displays. FED HPTF Getter. Brochure.2004], without losses in the pumping rate.
   The sorption capacity of such a thickened gas sorbent increases proportionally to the thickening. Therefore, at the thickness of a getter coating of 1 mm, which is trivial to obtain with the new technology, the specific sorption capacity, i.e. the sorption capacity per 1cm² , appears to be approximately 10 times higher than in the case of the conventional HPTF getter.
   Thus, a new metallic gas sorbent has been developed, the working substances of which are transition metals Hf, Ti, V or Zr, or rare-earth metals Ce, La, Nd, Pr, Sm etc., except Eu and Yb, or alkaline-earth metals Mg, Ca, Sr, and Ba. Each of these groups can also contain a certain amount of more active metals: Dy, Er, Gd, Ho, Nd or Cu in case of the first group, Li, Eu or Yb in case of the second, and Na in case of the third.
   The gas sorbent is manufactured in a granular or a planar form. Under granules we understand loose granules, granules on a wire core or coarse powders, and under planar gas sorbents getter coatings on a substrate, or separate getter plates.
   The main feature of our product, distinguishing it from what is currently available in the market, is a special discrete structure of the new material: the new material consists of alternating long crystals of the primary phase A, separated by voids, which form one whole connected space. A favorable orientation of intercrystalline channels with respect to the apparent material surface (Fig. 1c) provides high gas permeability, which allows considerable thickening of the getter layer and leads to an increased sorption capacity per surface unit of the coating. Moreover, the closeness of the metallic rods both in shape and in size increases the life time of the gas sorbent by many times, because all the parts of such a material reach the threshold of embrittlement almost at the same time.
(2) The manufacturing of the new gas sorbents is a two-stage process, at the first stage of which the solidification of an alloy c₀ takes place, and at the second the vacuum evaporation of the excess of component M is accomplished.

Solidification stage. Crystallization according to a cellular-dendritic mechanism is characterized by its own range of conditions, beyond the boundaries of which there are the range of growth of a monocrystaline product on one side, and the range of formation of an amorphous product on the other side. Usually, for most metallic alloys, these two extreme variants of solidification leading to a monocrystaline or to an amorphous structure, respectively, require considerable and even extreme efforts for their realization. On the contrary, a cellular-dendritic growth prevails in a very wide range of cooling rates, covering 12 orders of magnitude [T.S. Srivatsan, et al: Progress in Materials Science, Vol. 39 (1995) 317 - 409], and is easily performed with the help of standard techniques, which are available in an average metallurgical laboratory. Structural analysis also does not present any difficulties due to a clear morphological individuality of dendritic crystals (Fig. 5).

Regarding the technology of producing granular gas sorbents, the best solution for the first stage is the quenching of droplets of the melt in a liquefied inert gas under pressure (in the case of large particles) as described in the prior art EP 1 600 232 A1, or the convective cooling of droplets in an inert gas flow (in the case of powders).

For planar gas sorbents with their directed micro-rod structure any method of crystallization on a frontally cooled substrate is suitable for the first stage. This can be crystallization from a melt or crystallization from a gas-vapor medium as a physical condensation. In the first case a liquid layer c₀ can be created by thermal spraying on a moving substrate, with the help of special casting methods, or by a splat cooling method etc. In the second case cathode spraying methods are very convenient for the new materials, because no heating of the source is required and the process can be performed under considerably higher pressures of an inert gas, at the level of 10⁻¹ - 10⁻³ mbar.

Any of the above mentioned methods of crystallization of planar materials, as well as any additional ones developed for the same purpose, must satisfy the following requirements:
- the crystallization rate R and the temperature gradient G (or a degree of oversaturation for growth from vapor) correspond to the criteria of stability of a cellular or dendritic solidification front;
- the temperature gradient in the solidifying layer is perpendicular to the substrate surface;
- the substrate is wetted by the c₀ melt.

Boundaries of cellular and dendritic crystallization can be defined by calculations from the data about A - M phase diagrams and from thermophysical parameters of the process which have sufficient accuracy for practice, or are found by preliminary experiments with the help of structural investigations.

Evaporation stage. The target of this operation is the creation of channels in the solidified alloy c₀, which go throughout the entire depth of the material, by evaporation of the excess of volatile material M. All the necessary prerequisites for this treatment are determined already at the stage of selection of the components A and M and during organization of the crystallization process. These prerequisites are:
- a two-phase structure of the c₀ alloy, consisting of phase A (limited solid solution of M in A) and phase M (practically crystals of pure M);
- a large difference in partial pressures of the components, namely p_{M}/p_{A} > 10³;
- a special structure of the alloy c₀, which can be presented as a discrete set of crystals of phase A, immersed in a fine mixture of phases comprising A and M, which forms one whole body with multiple interfaces with and apertures to the alloy surface;

The evaporation process consists of heating the material c₀ in vacuum to those minimal temperatures, which provide sufficiently fast evaporation of the excess of component M without substantial roughening of the structural constituent A of the material. What should be understood under the excess of component M depends on the application field of the gas sorbent, which may consist not only of crystals of the pure phase A, but may also contain some amount of M. During evaporation of component M the gross composition of the material continuously changes in the range from c₀ to c_{α}, where c_{α} is concentration of M in solid A at saturation. The difference in concentration between c₀ and the end product generally defines the excess amount of component M.

The outside pressure P in the evacuation chamber should follow the ratio p_{A} < P << p_{M}, and also meet the technical requirement 10⁻⁸ mbar ≲ P ≲ 10⁻⁶ mbar, providing the necessary purity level of the getter material. These two ratios determine the temperature regime for the process of evaporation of the metal M from the alloy c₀.

In the case of gas sorbents on the basis of Hf, Ti, V and Zr, the process of making the structure of c₀ spongy is a process of sublimation of the M phase crystals at 800°C - 1000°C. The physicochemical aspect of this phenomenon is considered in the prior art EP 1 600 232 A1.

In the case of gas sorbents on the basis of rare-earth metals, the evaporation of M from the alloy c₀ is performed either by sublimation of M phase crystals at a temperature of 300°C - 400°C, if M = Eu, Yb, or by evaporation of M from the liquid L₂ at the same temperature 300°C - 400°C, if M = Li (Fig. 2b).

Finally, in the case of gas sorbents on the basis of alkaline-earth metals, where Na is used as component M, the evaporation process is performed at 200°C - 300°C.

Owing to its fine structure and high affinity to gases the product thus obtained should be immediately built into the end device or reliably packed - by a method which does not allow any contact with the air - for transportation to the customers. The peculiar advantage of the new gas sorbent lies in the fact that its surface is formed by opening the inner interphase boundaries of the material in relatively high vacuum. Such surface is pure and very active.

For granular gas sorbents manufactured in an apparatus of periodic action (see EP 1 600 232 A1), this method includes sealing of each portion of granules in glass ampoules still inside the apparatus. Further, these granules must be loaded into the targeted devices, e.g. into a body of a gas purifier, in special boxes under high purity inert atmosphere.

In the case of planar gas sorbents deposited by sputtering it is more convenient to use the presently common scheme of sequential transport of the treated product through a system of sealed doors from one chamber to another [New ARISTO. Applied Films GmbH 06.2004]: first a substrate with a coating of composition c₀ is transported from a growth chamber to an evaporation chamber, then from the evaporation chamber the as-prepared gas sorbent is transported to an assembly chamber, where it is built into a device, which is then pumped down and sealed off.

## Claims

1. Metallic gas sorbents with high surface area on the basis of metals selected from the groups consisting of transition metals, rare-earth metals and alkaline-earth metals, of the composition A - M, in the form of isolated cellular or dendritic carcass of metal A, the empty space of which being either free or partially filled with a more volatile and chemically active metal M,
wherein the components A and M fulfill the condition p_{M} / p_{A} ≥ 10³, where p is the vapor pressure of the corresponding components,
obtainable by a method comprising the steps of
- cellular - dendritic crystallization of an alloy of the composition A - M;
- vacuum evaporation of excess of M, especially at an outside pressure of 10⁻⁸ mbar ≤ P ≤ 10⁻⁶ mbar,
wherein the cellular or dendritic carcass consists of metal A or of a solid solution of M in A, and the intercellular or interdendritic space is either void or partially filled with M.

2. The gas sorbents according to claim 1, wherein metal A is a transition metal Hf, Ti, V or Zr or any alloy of these metals or one of these metals with a small addition of a third metal, preferably a non-volatile metal for enhancing the mechanical strength of the material of the gas sorbent, different from A and M and where M is Dy, Er, Gd, Ho, Nd or Cu, or any alloy of these metals.

3. The gas sorbents according to claim 1, wherein metal A is any rare earth metal except Eu or Yb, preferably of the group of Ce, La, Nd, Pm, Pr, Sm, or any alloy of these metals, or one of them with a small addition of a third metal, preferably a non-volatile metal for enhancing the mechanical strength of the material of the gas sorbent, which does not belong to the groups of A or M, and metal M is Li, Eu or Yb or any alloy of these metals.

4. The gas sorbents according to claim 1, wherein metal A is an alkaline earth metal from the group of Mg, Ca, Sr or Ba, or any alloy of these metals, or one of them with a small addition of a third metal, preferably a non-volatile metal for enhancing the mechanical strength of the material of the gas sorbent, which does not belong to group A, and metal M is Na.

5. The gas sorbents according to any of claims 1 to 4, produced in a form of granules with a dendritic carcass A, in which the interdendritic space can be partially filled with metal M.

6. The gas sorbents according to any of claims 1 to 4, produced in a form of a cover layer, consisting of cellular crystals A and a system of intercrystalline parallel channels, directed perpendicular to the substrate.

7. A method for the production of metallic gas sorbents according to one or more of the preceding claims 1 to 6, comprising the following steps:
- cellular - dendritic crystallization of alloy A - M;
- vacuum evaporation of excess of M, especially at the outside pressure of 10⁻⁸ mbar ≤ P ≤ 10⁻⁶ mbar,

8. The method according to claim 7, wherein crystallization is performed by quenching of melt droplets into liquid argon under a pressure higher than 1 bar.

9. The method according to claim 7, wherein crystallization is performed by quenching of the melt or growth from vapor on a frontally cooled metallic substrate.

10. The method according to claims 7 to 9, wherein the crystallized substance has composition 0 < c₀ < cₑ, if the A - M system is of an eutectic type or composition 0 < c₀ < cₘ, if the A - M system is of a monotectic type, where cₑ and cₘ are the concentrations of M at an eutectic or a monotectic point, respectively, and the components A and M are selected according to claims 2 - 4.

11. The method according to claims 7 to 9, wherein the crystallized substance has composition 0 < c₀ < cₘ, where cₘ is the concentration of M at a monotectic point and the components A and M are selected according to claim 3.

12. The method according to claims 7 to 9, wherein the crystallized substance has composition 0 < c₀ < cₑ if the A - M system is of an eutectic type, or composition 0 < c₀ < cₘ if the A - M system is of a monotectic type, where cₑ and cₘ are the concentrations of M at an eutectic or monotectic point, respectively, and the components A and M are selected according to claim 4.

13. The method according to claims 2 and 7, wherein evaporation of the volatile component M is carried out at a temperature of about 800°C to about 1000°C.

14. The method according to claims 3 and 7, wherein evaporation of the volatile component M is carried out at a temperature of about 300°C to about 450°C.

15. The method according to claims 4 and 7, wherein evaporation of the volatile component M is carried out at a temperature of about 200°C to about 300°C.
